# DEMANDE DE BREVET EUROPEEN

(11) **EP 2 182 490 A1**
(43) Date de publication de la demande: **05.05.2010**
(21) Numéro de dépôt: 09174011.8
(22) Date de dépôt: 26.10.2009
(51) Int. Cl.: G07B 17/00

(54) **Procédé de traitement de courrier à identifiants multiples**

(30) Priorité: 28.10.2008 FR 0857315
(71) Demandeur: NEOPOST TECHNOLOGIES, 92220 Bagneux (FR)
(72) Inventeur: Chatte, Fabien, 94130, Nogent sur Marne (FR); Pillard, Romain, 77210, Avon (FR)
(74) Mandataire: David, Alain

(57) **Abrégé**

Procédé de traitement d'un article de courrier (10) comportant des identifiants à usage postal (10A) et des identifiants autres (10B, 10C) et dans lequel les identifiants autres que ceux à usage postal sont imprimés sur l'article de courrier préalablement à son introduction dans une machine à affranchir (14) apte à imprimer une empreinte postale sur l'article de courrier, procédé dans lequel les identifiants autres que ceux à usage postal sont imprimés avec une encre qui est effacée à l'issue du processus d'impression de l'empreinte postale.

## Description

### Domaine de l'invention

La présente invention se rapporte au domaine du traitement de courrier et elle concerne plus particulièrement un procédé destiné à faciliter le traitement par l'administration postale des différents identifiants à usage postal portés sur des articles de courrier lors de l'impression d'une empreinte postale par une machine d'affranchissement.

### Art antérieur

Aujourd'hui, les entreprises souhaitent évaluer avec de plus en plus de précision les coûts engendrés par chacun de leur service pour en estimer la rentabilité intrinsèque. Le calcul de ces coûts impliquant notamment de connaître les montants des affranchissements pouvant être rattachés à chacun de ces services, il est devenu nécessaire d'imprimer sur les articles de courrier des identifiants permettant ce rattachement lors de leur passage dans la machine d'affranchissement. Par ailleurs, afin notamment de simplifier la structure des machines d'affranchissement, il est courant de recourir aussi à d'autres identifiants plus spécifiques portés à nouveau sur les articles de courrier, comme un code à barres représentatif du format de l'article de courrier.

Malheureusement, la présence sur l'article de courrier de tous ces identifiants ne facilite pas le travail de reconnaissance ultérieure de l'administration postale qui a alors le plus grand mal à retrouver ses propres codes (les codes à usage postaux POSTNET ou PLANET par exemple) parmi la multitude d'identifiants à usage interne (et dont elle n'a que faire) également présents sur les articles de courrier. Il en résulte une perte d'argent pour l'expéditeur si les codes postaux n'ont pu être reconnus empêchant le courrier de toucher son destinataire ou, le plus souvent, une perte de temps pour l'administration postale qui en est réduit à traiter ces articles de courrier manuellement.

On est donc aujourd'hui à la recherche d'une solution qui satisfasse à la fois le besoin de l'administration postale pour un nombre d'identifiant limité aux seuls identifiants postaux et le besoin des entreprises qui, au contraire, réclament de multiples identifiants pour de multiples usages internes.

### Objet et définition de l'invention

Le but de la présente invention est donc de proposer un nouveau procédé de traitement de courrier qui réponde à ces deux besoins tout à fait contradictoires.

Ce but est atteint par un nouveau procédé de traitement d'un article de courrier comportant des identifiants à usage postal et des identifiants autres et dans lequel lesdits identifiants autres que ceux à usage postal sont inscrits avec une encre thermosensible sur ledit article de courrier préalablement à son introduction dans une machine à affranchir apte à imprimer une empreinte postale sur ledit article de courrier, procédé **caractérisé en ce que** lesdits identifiants autres que ceux à usage postal sont effacés à l'issue du processus d'impression de ladite empreinte postale, une fois ledit article de courrier éjecté de ladite machine à affranchir, par chauffage dudit article de courrier au delà d'une température prédéterminée, à partir d'une circulation contrôlée d'air chaud.

Ainsi, avec ce procédé, seuls les identifiants à usage postal restent apparents sur les articles de courrier remis à l'administration postale qui n'éprouve plus alors aucune difficulté à les traiter alors que la présence avant leur effacement des autres identifiants permet à l'expéditeur de satisfaire à ses usages internes.

Ladite inscription peut être effectuée par impression jet d'encre ou par écriture manuelle.

Avantageusement, lesdits identifiants peuvent être des codes à barres à une ou deux dimensions, des inscriptions manuelles ou encore des inscriptions alpha numériques. Lesdits identifiants peuvent être lus et interprétés par un système de lecture optique.

La présente invention concerne également un système de traitement d'articles de courrier comportant une machine à affranchir suivie d'un module de réception d'articles de courrier destiné à recevoir lesdits articles de courrier une fois affranchis, lesdits articles de courrier comportant chacun des identifiants à usage postal et des identifiants autres inscrits avec une encre thermosensible, **caractérisé en ce que** ledit module de réception d'articles de courrier comporte des moyens d'effacement desdits identifiants autres par chauffage dudit article de courrier au delà d'une température prédéterminée, à partir d'une circulation contrôlée d'air chaud.

Avantageusement, lesdits moyens d'effacement comportent des moyens de soufflage d'air chaud extrait de ladite machine à affranchir.

Ledit module de réception peut comporter en outre un premier capteur de température est prévu pour contrôler que ladite température prédéterminée a bien été atteinte. Il peut aussi comporter une ou plusieurs résistances chauffantes pour atteindre ladite température prédéterminée nécessaire audit effacement desdits identifiants autres dès les premiers articles de courrier affranchis par ladite machine à affranchir.

De préférence, il comporte en outre des moyens d'extraction d'air pour accélérer le refroidissement des articles de courrier une fois ledit effacement réalisé et un second capteur de température est prévu pour contrôler la température de refroidissement atteinte une fois ledit effacement réalisé.

Ledit module de réception d'articles de courrier peut comporter en outre des moyens d'obturation fixe et mobile pour, en fonction de l'épaisseur desdits articles de courrier introduits dans ledit module, fermer une fente d'introduction desdits articles de courrier au plus prêt de l'article de courrier et ainsi limiter les pertes de chaleur.

Avantageusement, il peut comporter en outre deux enceintes, une de chauffage et une de refroidissement.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique en perspective d'un système de traitement de courrier intégrant un module de réception de courrier permettant la mise en oeuvre du procédé selon l'invention,
- les figures 2 et 3 sont respectivement une vue de dessus et une vue de face du système de traitement de courrier de la figure 1, et
. la figure 4 est une vue de face du module de réception des articles de courrier.

### Description détaillée d'un mode de réalisation préférentiel

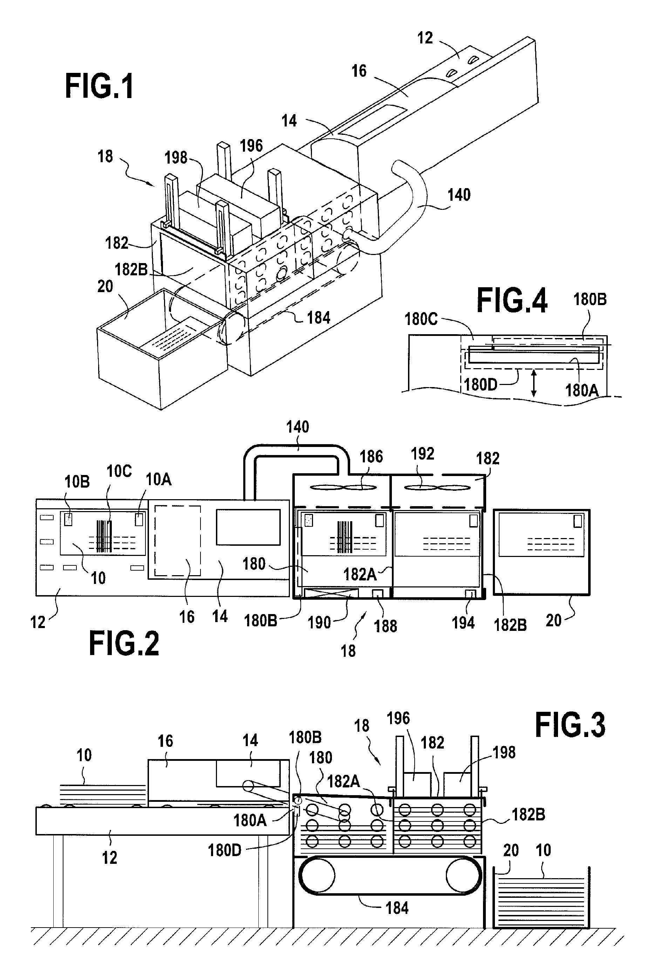

La figure 1 illustre en perspective simplifiée un système de traitement de courrier traditionnel comportant, comme il est connu et disposés d'amont en aval selon la direction d'avancée des articles de courrier 10 (enveloppes comportant chacune un ou plusieurs documents obtenus éventuellement après pliage en amont de certains d'entre eux dans un module de pliage et d'insertion non représenté), un module 12 d'alimentation en articles de courrier destiné à recevoir une pile d'articles de courrier typiquement en vrac (c'est à dire de dimensions et de poids différents), à sélectionner et transporter un à un de ces articles de courrier et un module d'impression 14 (la machine à affranchir proprement dite) destiné à imprimer une empreinte postale sur chacun des articles de courrier ainsi sélectionnés un à un.

De plus en plus fréquemment et plus particulièrement dans le cadre de la présente invention, ce système de traitement de courrier de courrier comporte avantageusement un module 16 de lecture optique muni d'un capteur linéaire « à contact » (non représenté) et disposé par exemple en amont du module d'impression 14, pour, associé à des logiciels de reconnaissance de codes à barres et/ou de reconnaissance OCR, faire l'acquisition d'une image numérique des articles de courrier et plus précisément des identifiants que peuvent comporter ces articles de courrier.

En effet, comme illustré à la figure 2 et rappelé en préambule, les articles de courrier 10, indépendamment de l'impression ultérieure de l'empreinte postale 10A, comportent préimprimés lors de leur fabrication ou bien imprimés dans une phase précédente de traitement (phase de pliage et d'insertion par exemple), différents identifiants à usage interne de l'expéditeur destinés par exemple à permettre un calcul automatique du montant d'affranchissement (comme un identifiant 10B relatif au format de l'article de courrier), ou une affectation automatique du montant calculé à un service déterminé de l'expéditeur (identifiant 10C par exemple). Il peut être aussi envisagé des identifiants inscrits manuellement pour un usage spécifique, comme l'apposition de la lettre R par le service expéditeur pour informer le service courrier que l'article concerné doit être envoyé en recommandé.

Ces identifiants qui permettent de faciliter le traitement ou l'exploitation du courrier au niveau de la machine à affranchir de l'expéditeur sont lus et interprétés au niveau du module de lecture optique 16 (ou encore par l'opérateur de la machine) mais ne sont plus d'aucune utilité une fois l'empreinte postale imprimée par le module d'impression 14 et l'article de courrier mis à disposition de l'administration postale.

C'est pourquoi, conformément à l'invention, il est proposé d'imprimer ces identifiants, à usage du seul expéditeur, au moyen d'une encre effaçable du type de celles sensibles à la température et de réaliser l'effacement de cette encre thermosensible, une fois l'empreinte postale imprimée, au niveau d'un module 18 de réception des articles de courrier disposé en sortie du module d'impression 14 et organisé autour d'un caisson de préférence sensiblement étanche à l'air extérieur et dans une zone interne duquel règne une température prédéterminée suffisante pour permettre un effacement de ces identifiants et rendre cet effacement irréversible à température ambiante. La température d'effacement dépend de l'encre thermosensible utilisée. Ainsi, par exemple pour une encre du type « friction pen ink », cette température est typiquement de l'ordre de 65 °C.

Comme illustrés aux figures 2 et 3, ce module de forme parallélépipédique comporte deux zones distinctes et adjacentes, une zone 180 d'accumulation et de chauffage des articles de courrier affranchis dans laquelle est réalisée une circulation contrôlée d'air chaud et une zone 182 de refroidissement de ces articles de courrier qui lui succède, un tapis convoyeur 184 disposé à la base du module assurant le transfert des articles de courrier d'une zone à l'autre. La première zone 180 est constituée par une première enceinte 180 délimitée en partie basse par le tapis convoyeur et dans laquelle vont tomber et venir s'empiler les articles de courrier éjectés un à un du module d'impression 14 et introduits dans cette enceinte par une fente d'entrée 180A disposée à hauteur de la fente de sortie de la machine à affranchir et constituant la fente d'entrée du module. La seconde zone 182 est constituée par une seconde enceinte délimitée en partie basse également par le tapis convoyeur et comportant en face à face une porte d'entrée 182A formant la paroi de fond de la première enceinte et une porte de sortie 182B constituant la paroi de fond et la porte de sortie du module.

La première enceinte 180 comporte, outre des moyens d'entrainement (rouleau 180B) pour accompagner le déplacement des articles de courrier et des moyens d'obturation fixe 180C et mobile 180D pour, en fonction de leur épaisseur, fermer la fente d'entrée 180A au plus prêt de l'article de courrier (voir la figure 4) et ainsi limiter les pertes de chaleur au travers de cette fente d'entrée, des moyens de soufflage 186 pour y introduire de l'air chaud prélevé dans l'exemple illustré par un conduit 140 au niveau de la machine à affranchir (mais bien entendu un prélèvement externe indépendant de la machine à affranchir est tout aussi envisageable), machine dont les composants électromagnétiques (moteurs, pompe, ventilateur, alimentation interne, cartes électroniques, etc.) dissipent une quantité importante de chaleur (typiquement la température de fonctionnement de des composants électroniques est de l'ordre de 85°C) qui peut donc être avantageusement récupérée pour cette utilisation. Un capteur de température 188 disposé dans cette première enceinte permet de garantir une régulation adéquate de la température à l'intérieur de l'enceinte autour d'une température prédéterminée (et dépendante de l'encre utilisée). Pour permettre l'opération d'effacement dès la mise en route de la machine à affranchir, c'est à dire alors que ses composants n'ont pas encore atteints leur température de fonctionnement et donc une température suffisante pour assurer l'effacement des identifiants, il peut être intéressant de prévoir dans cette première enceinte une ou plusieurs résistances chauffantes 190 pour atteindre plus rapidement et dès les premiers articles de courrier affranchis la température nécessaire à cet effacement.

La seconde enceinte 182 comporte avantageusement des moyens d'extraction d'air 192 pour assurer un refroidissement plus rapide des articles de courrier en extrayant l'air chaud présent dans cette seconde enceinte. Un capteur de température 194 disposé dans l'enceinte permet de contrôler la température atteinte à l'intérieur de l'enceinte afin de décider de l'instant de son ouverture.

Le procédé de l'invention comporte plusieurs phases se déroulant tantôt successivement tantôt simultanément. L'affranchissement est effectué en général par lots, l'opérateur disposant dans le module d'alimentation 12 le premier lot d'articles de courrier et le module d'impression 14 assurant l'impression de l'empreinte postale sur chacun des articles de ce lot. Une fois affranchis, les articles tombent alors un à un dans la première enceinte 180 sans que l'empreinte postale ne soit maculer. En effet, le rouleau 180B est écarté de la paroi longitudinale de mise en référence d'une distance au moins égale à la largeur d'une empreinte postale et l'obturateur fixe 180C est également légèrement en retrait de la paroi haute de mise en référence. Parallèlement au processus d'affranchissement qui se poursuit sur l'ensemble du lot d'articles de courrier (ou jusqu'au complet remplissage de la première enceinte), le système de soufflage de l'air chaud 186 est actionné pour permettre d'atteindre dans cette première enceinte la température prédéterminée nécessaire à l'effacement des identifiants à usage interne présents sur les articles de courrier s'empilant dans l'enceinte. Une fois cette température atteinte et maintenue pendant une durée (dépendant de la nature de l'encre utilisée) suffisante pour assurer l'effacement, le tapis convoyeur est mis en mouvement permettant l'introduction des articles de courrier dans la seconde enceinte 182 dont la porte d'entrée 182A est alors ouverte (par les moyens de commande appropriés 196) pour les recevoir. Une fois les articles de courrier en position dans la seconde enceinte, le tapis convoyeur est arrêté, la porte d'entrée du caisson fermée et le système d'extraction d'air peut alors être mis en route pour accélérer le refroidissement des articles de courrier. L'opérateur peut alors procéder au traitement d'un second lot d'articles de courrier en le déposant dans le module d'alimentation et procéder à l'impression de chacun des articles de courrier de ce second lot qui, comme précédemment, va terminer sa course dans la première enceinte. Pendant ce temps, la température interne de la seconde enceinte va redescendre pour atteindre la température ambiante ou au moins à une température raisonnable pour l'opérateur, typiquement autour de 40 à 50°C. Une fois cette température atteinte, la porte de sortie 182B de la seconde enceinte est ouverte (par les moyens de commande appropriés 198) et l'opérateur peut alors s'il le souhaite extraire sans risque les articles de courrier. A défaut, l'éjection du premier lot se fera automatiquement à la remise en mouvement du tapis convoyeur une fois le second lot traité. Une fois le premier lot dans le bac de livraison 20, la porte de sortie sera fermée. La porte d'entrée 182A peut alors être ouverte pour transférer le second lot traité (qui aura été plaqué contre cette porte d'entrée par le déplacement du convoyeur) dans la seconde enceinte, laquelle porte sera ensuite refermée une fois ce second lot en place. Ainsi, il n'est jamais procédé à l'ouverture simultanée des portes d'entrée et de sortie de sorte que les pertes de chaleur sont limitées.

On notera que, si dans la description précédente, il a été fait état d'un seul convoyeur pour le transfert des articles de courrier entre les deux enceintes, il est clair qu'il est aussi possible de recourir à deux convoyeurs indépendants pour chacune de ces enceintes.

Ainsi, avec l'invention, les articles de courrier disponibles dans le bac de livraison ne comportent plus que les seuls identifiants à usage postal et plus aucun des identifiants à usage interne imprimés préalablement avec de l'encre effaçable et dont l'exploitation suite à leur saisie par le module de lecture optique a été faite au plus tard au niveau du module d'impression.

## Revendications

1. Procédé de traitement d'un article de courrier (10) comportant des identifiants à usage postal (10A) et des identifiants autres (10B, 10C) et dans lequel lesdits identifiants autres que ceux à usage postal sont inscrits avec une encre thermosensible sur ledit article de courrier préalablement à son introduction dans une machine à affranchir (14) apte à imprimer une empreinte postale sur ledit article de courrier, **caractérisé en ce que** lesdits identifiants autres que ceux à usage postal sont effacés à l'issue du processus d'impression de ladite empreinte postale, une fois ledit article de courrier éjecté de ladite machine à affranchir, par chauffage dudit article de courrier au delà d'une température prédéterminée, à partir d'une circulation contrôlée d'air chaud.

2. Procédé selon la revendication 1, **caractérisé en ce que** ladite inscription est effectuée par impression jet d'encre ou par écriture manuelle.

3. Procédé selon la revendication 1 ou la revendication 2, **caractérisé en ce que** lesdits identifiants sont des codes à barres à une ou deux dimensions, des inscriptions manuelles ou encore des inscriptions alpha numériques.

4. Procédé selon la revendication 1, **caractérisé en ce que** lesdits identifiants sont lus et interprétés par un système de lecture optique (16).

5. Système de traitement d'articles de courrier comportant une machine à affranchir (14) suivie d'un module de réception d'articles de courrier (18) destiné à recevoir lesdits articles de courrier une fois affranchis, lesdits articles de courrier comportant chacun des identifiants à usage postal (10A) et des identifiants autres inscrits avec une encre thermosensible (10B, 10C), **caractérisé en ce que** ledit module de réception d'articles de courrier comporte des moyens d'effacement desdits identifiants autres par chauffage dudit article de courrier au delà d'une température prédéterminée, à partir d'une circulation contrôlée d'air chaud.

6. Système selon la revendication 5, **caractérisé en ce que** lesdits moyens d'effacement comportent des moyens de soufflage d'air chaud (186) extrait de ladite machine à affranchir.

7. Système selon la revendication 6, **caractérisé en ce que** ledit module de réception d'articles de courrier comporte en outre un premier capteur de température (188) pour contrôler que ladite température prédéterminée a bien été atteinte.

8. Système selon la revendication 6, **caractérisé en ce que** ledit module de réception d'articles de courrier comporte en outre une ou plusieurs résistances chauffantes (190) pour atteindre ladite température prédéterminée nécessaire audit effacement desdits identifiants autres dès les premiers articles de courrier affranchis par ladite machine à affranchir.

9. Système selon la revendication 5, **caractérisé en ce que** ledit module de réception d'articles de courrier comporte en outre des moyens d'extraction d'air (192) pour accélérer le refroidissement des articles de courrier une fois ledit effacement réalisé.

10. Système selon la revendication 5, **caractérisé en ce que** ledit module de réception d'articles de courrier comporte en outre un second capteur de température (194) pour contrôler la température de refroidissement atteinte une fois ledit effacement réalisé.

11. Système selon l'une quelconque des revendications 1 à 10, **caractérisé en ce que** ledit module de réception d'articles de courrier comporte en outre des moyens d'obturation fixe (180C) et mobile (180D) pour, en fonction de l'épaisseur desdits articles de courrier introduits dans ledit module, fermer une fente d'introduction desdits articles de courrier (180A) au plus prêt de l'article de courrier et ainsi limiter les pertes de chaleur.

12. Système selon l'une quelconque des revendications 1 à 11, **caractérisé en ce que** ledit module de réception d'articles de courrier comporte en outre deux enceintes, une de chauffage (180) et une de refroidissement (182).
